# DEMANDE DE BREVET EUROPEEN

(11) **EP 0 627 678 A1**
(43) Date de publication de la demande: **07.12.1994**
(21) Numéro de dépôt: 94400763.2
(22) Date de dépôt: 07.04.1994
(51) Int. Cl.: G05D 23/19, H05B 6/06, F24H 3/00

(54) **Dispositif de chauffage pour radiateur à eau ou autre liquide caloporteur**

(30) Priorité: 09.04.1993 FR 9304227
(71) Demandeur: Seye, Félix, F-78700 Conflans Ste Honorine (FR)
(72) Inventeur: Seye, Félix, F-78700 Conflans Ste Honorine (FR)
(74) Mandataire: Obolensky, Michel

(57) **Abrégé**

Dispositif de chauffage pour radiateur à eau ou autre liquide caloporteur, caractérisé en ce qu'il comporte au moins un inducteur (14) destiné à être appliqué contre une paroi du radiateur avec interposition d'une couche de matériau isolant, alimenté par un généra- teur de puissance (26) et adapté pour élever la tempéra- ture du radiateur, au moins un premier capteur (18,30) de mesure de la température du radiateur et un dispositif de commande de température (28,31) adapté pour commander en fonction de la température mesurée par le premier capteur le fonctionnement de l'inducteur (14) pour réguler la température du radiateur autour d'une valeur de consigne à laquelle le radiateur est autorisé à être chauffé.

## Description

L'invention concerne un dispositif de chauffage pour radiateur à eau ou à liquide caloporteur en métal ferreux ou non ferreux ainsi qu'un radiateur comportant un tel dispositif.

On connaît des dispositifs de chauffage pour radiateur à eau ou à liquide caloporteur par circulation d'eau ou par résistance électrique interne.

Ces dispositifs de chauffage, nécessitent dans le premier cas, une résistance électrique insérée dans un isolant généralement en céramique pour assurer l'isolation électrique, et recouvert d'un tube en acier inoxydable pour assurer l'étanchéité de l'ensemble.

La résistance électrique entourée de céramique et d'acier étant en contact direct avec l'eau ou le liquide caloporteur, ces dispositifs de chauffage peuvent être le siège de court-circuits. Une mise à la terre de la résistance électrique est donc impérative afin d'éviter de très graves accidents d'électrocution.

Les dispositifs de chauffage par circulation d'eau sont généralement constitués par une chaudière dans laquelle l'eau ou le liquide caloporteur est élevé en température, un vase d'expansion pour permettre la dilatation du liquide, et un réseau de canalisations reliant la chaudière à chaque radiateur.

Dans ces dispositifs, le fluide est chauffé dans la chaudière puis circule en circuit fermé dans les canalisations vers les radiateurs au niveau desquels il transmet les calories qu'il contient pour élever la température du local à chauffer.

Ces dispositifs comportent de plus un accélérateur de circulation d'eau afin de permettre une circulation efficace par effet piston du fluide dans les canalisations.

Ces dispositifs de chauffage nécessitent une installation onéreuse et complexe et font appel à des réseaux de canalisations apparents ce qui nuit à l'esthétique du local qui en est équipé.

De plus, des pertes de calories importantes se produisent au niveau des canalisations.

Ces dispositifs de chauffage présentent en outre une inertie thermique importante.

Leur rapidité de montée en température est par conséquent faible, ce qui entraîne une augmentation de la consommation en énergie et un mauvais rendement.

La présente invention vise à pallier ces inconvénients en proposant un dispositif de chauffage pour radiateur à eau ou liquide caloporteur dans lequel la température du radiateur est accrue sans contact avec le dispositif au moyen d'une création de chaleur au sein même du matériau à chauffer.

A cet effet, la présente invention a pour objet un dispositif de chauffage pour radiateur à eau ou autre liquide caloporteur, caractérisé en ce qu'il comporte au moins un inducteur destiné à être appliqué contre une paroi du radiateur avec interposition d'une couche de matériau isolant, alimenté par un générateur de puissance et adapté pour élever la température du radiateur, au moins un premier capteur de mesure de la température du radiateur et un dispositif de commande de température adapté pour commander, en fonction de la température mesurée par le premier capteur, le fonctionnement de l'inducteur pour réguler la température du radiateur autour d'une valeur de consigne à laquelle le radiateur est autorisé à être chauffé.

On obtient ainsi un dispositif de chauffage présentant peu de déperdition calorifique et une puissance de chauffe restituée maximale, une faible inertie thermique et une densité de puissance élevée qui permet une rapidité de chauffe élevée.

D'autres caractéristiques et avantages ressortiront de la description suivante, donnée à titre d'exemple et sans caractère limitatif, en regard des dessins annexés dans lesquels :
- les figures 1 et 2 sont des vues schématiques illustrant des dispositifs de chauffage de radiateur selon l'art antérieur ;
- les figures 3 et 3a sont des vues schématiques respectivement de face et de dessus d'un dispositif de chauffage de radiateur selon l'invention ;
- la figure 4 est une vue schématique illustrant un radiateur chauffé au moyen de plusieurs dispositifs de chauffage selon l'invention ;
- la figure 5 est un schéma synoptique d'un premier mode de réalisation du dispositif de chauffage représenté sur les figures 3 et 3a ;
- la figure 6 est un schéma illustrant un exemple de réalisation d'une télécommande utilisée dans le mode de réalisation représenté sur la figure 5 ;
- la figure 7 est un schéma synoptique d'un second mode de réalisation du dispositif de chauffage représenté sur les figures 3 et 3a ;
- la figure 8 est une vue schématique d'un exemple de réalisation d'un thermostat mis en oeuvre selon l'invention ;
- la figure 8a est un schéma synoptique du thermostat représenté sur la figure 8 ;
- la figure 9 représente un schéma détaillé du circuit du dispositif de chauffage représenté sur la figure 7 ;
- la figure 10 représente un schéma détaillé du circuit du thermostat représenté sur les figures 8 et 8a; et
- les figures 11 et 11a représentent des schémas illustrant l'organisation de trames utilisées pour le transfert de données dans le mode de réalisation illustré sur la figure 7.

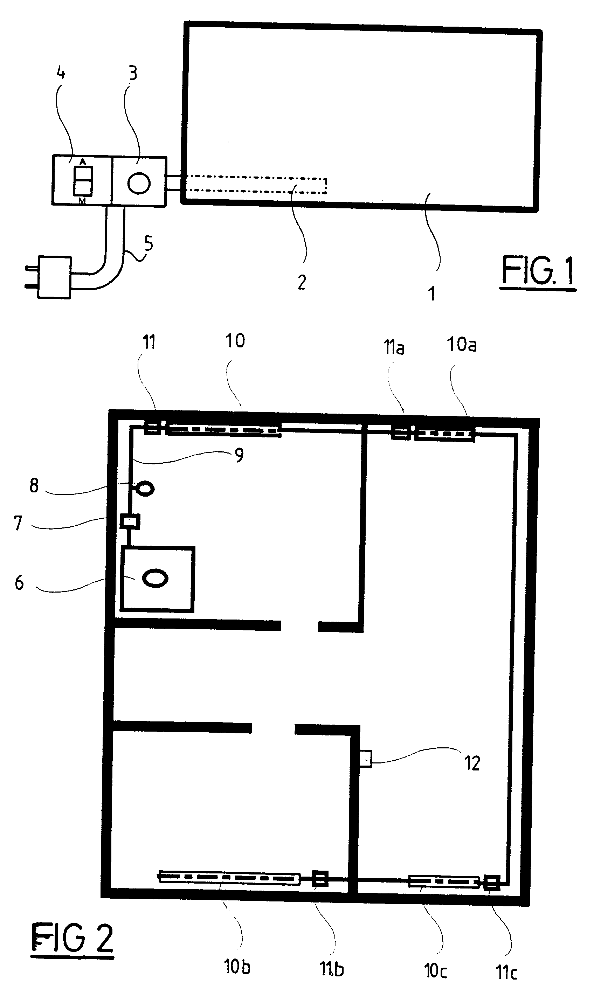

La figure 1 représente un premier mode de réalisation d'un dispositif de chauffage pour un radiateur 1 à eau ou à liquide caloporteur.

Ce dispositif comporte une résistance électrique 2 insérée dans de la céramique et recouverte d'un tube en acier inoxydable.

Cette résistance 2 est disposée à l'intérieur du radiateur 1 et le tube en acier inoxydable est en contact direct avec le fluide à chauffer.

La résistance 2 est commandée par un bloc de régulation par thermostat d'ambiance 3 et par un interrupteur bipolaire 4, reliés au secteur par un cordon d'alimentation 5.

L'ensemble constitué par le radiateur 1, la résistance 2 et le bloc de régulation 3 formant un bloc solidaire et placé à environ 20 cm du sol, la mesure de la température réalisée par le bloc de régulation ne peut être une reproduction fidèle de la température du local en raison de la proximité de la source de chaleur.

Comme on l'a mentionné précédemment ce dispositif présente certains inconvénients notamment en ce qui concerne son inertie thermique importante.

En effet, la résistance électrique transmet la chaleur au fluide par l'intermédiaire de l'isolant en céramique et du tube en acier inoxydable ce qui entraîne une montée en température du radiateur relativement lente.

Sur la figure 2 on a représenté un autre type de dispositif de chauffage connu.

Ce dispositif comprend une chaudière 6, un accélérateur de circulation d'eau 7 et un vase d'expansion 8. La chaudière 6 alimente par l'intermédiaire d'un réseau de canalisations 9 un ensemble de radiateurs 10,10a,10b,10c placés dans différentes pièces et sur lesquels sont disposées des vannes munies de thermostats 11,11a,11b,11c.

La régulation au niveau de chaque pièce est assurée par la vanne munie d'un thermostat qui est disposée dans le haut du radiateur sur l'arrivée d'eau chaude. Le contrôle de la température de l'eau délivrée par la chaudière 6 est en revanche assuré par un thermostat 12 installé dans une autre pièce ce qui compromet la précision de la régulation.

Ainsi qu'on l'a mentionné précédemment ce dispositif présente une inertie thermique importante du fait de l'éloignement de la chaudière.

Pour pallier ces inconvénients, on utilise à la place de l'installation décrite ci-dessus des radiateurs séparés équipés chacun d'un dispositif de chauffage à induction suivant l'invention.

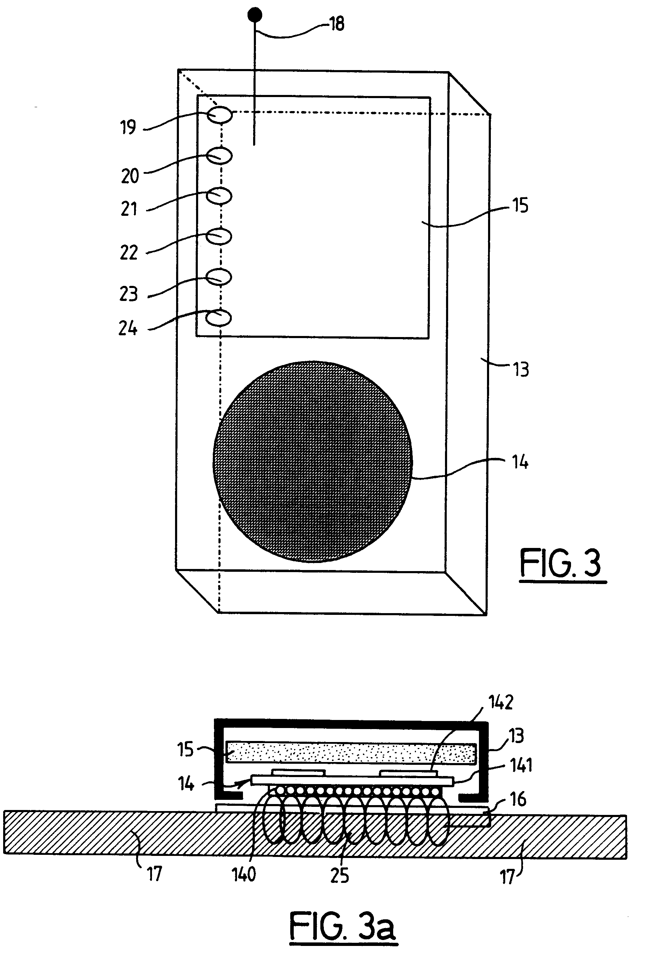

On a représenté sur les figures 3 et 3a un tel dispositif de chauffage.

Ce dispositif comporte un boîtier 13 dans lequel est disposé un inducteur 14 commandé par un dispositif de commande de température porté par une carte électronique 15.

Le boîtier 13 est disposé sur une plaque de matériau isolant 16, par exemple de la "Bakélite", elle même plaquée contre une paroi d'un radiateur 17.

Ce matériau isolant a de préférence une épaisseur de 3 mm et l'inducteur est avantageusement séparé de cet isolant d'une distance formant entrefer de 5 mm, de sorte qu'il est séparé du radiateur d'une distance de 8 mm.

Ce dispositif est implanté horizontalement dans le bas du radiateur. Toutefois sa structure interne permet de le positionner verticalement sur le côté du radiateur, soit à droite, soit à gauche.

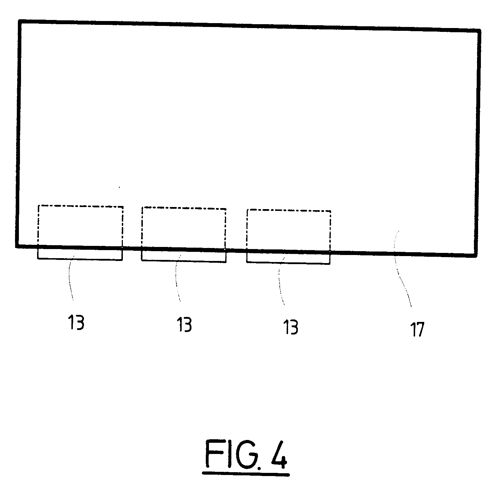

Sur la figure 4, on peut voir un exemple de réalisation du dispositif selon la présente invention pour un radiateur présentant une structure allongée mais basse, par exemple pour un radiateur disposé sous une vitrine où l'on ne dispose généralement pas plus de 50 cm de hauteur. Il comporte plusieurs inducteurs contenus dans des boîtiers 13 séparés répartis sur sa longueur pour obtenir la puissance désirée et de ce fait un meilleur rendement.

En revenant de nouveau à la figure 3 on voit que ce dispositif comporte également une résistance 18, par exemple en platine reliée à la carte électronique 15, destinée à mesurer la température du radiateur 17.

Toutefois, l'utilisation d'autres capteurs de température, notamment de diodes à coefficient de température négatif (CTN), de capteurs thermorésistances, de capteurs à coefficient de température positif (CTP), de thermocouples est également possible.

La carte électronique 15 est avantageusement munie de diodes 19,20,21,22,23 et 24 adaptées pour indiquer à l'utilisateur des informations concernant la nature du chauffage en cours d'exécution par exemple chauffage continu, chauffage alterné, hors gel, veille, etc...

L'inducteur 14 est de préférence de forme plane et comporte un conducteur 140 formé de plusieurs fils torsadés et enroulé sur lui même pour former un disque ou bobine plane. Avantageusement, ces fils sont constitués de cuivre et présentent un diamètre de 0,4 mm. Ils sont par exemple au nombre de 38.

Dans le cas où le radiateur est constitué de matériau non ferreux, on intercale entre la plaque 16 de matériau isolant et le radiateur 17 un suscepteur en matériau ferreux (non représenté) de forme complémentaire de celle de la surface du radiateur contre laquelle il est appliqué. Dans ce cas, le suscepteur en contact avec la paroi du radiateur 17 et la plaque de matériau isolant 16 peut être de forme plane pour les radiateurs dont la surface externe est plane, ou être muni de saillies et de creux pour s'adapter à des radiateurs classiques constitués d'éléments tubulaires juxtaposés.

Ainsi qu'on l'a représenté sur la figure 3, cet inducteur parcouru par des courants alternatifs générés par la carte électronique 15 crée un champ magnétique alternatif variable 25 qui engendre dans la paroi ferreuse du radiateur 17 ou du suscepteur un phénomène d'induction et par conséquent des courants induits, qui provoquent l'échauffement de la substance où ils ont pris naissance, à savoir la paroi du radiateur 17.

Avantageusement, une seconde plaque de matériau isolant 141 est plaquée sur la bobine plane 140 contre la face de cette bobine opposée à la plaque 16 située en regard du radiateur 17. De plus, des éléments de ferrite 142 sont disposés sur la seconde plaque de matériau isolant 141 de façon à refermer le champ magnétique à leur niveau, c'est-à-dire du côté opposé à la surface du radiateur.

Sur la figure 3a, on a représenté de tels éléments de ferrite en forme de barrettes disposés en étoile sur la seconde plaque de matériau isolant 141, mais ces éléments peuvent également être remplacés par un anneau continu.

Ainsi, ce dispositif de chauffage entraîne une création de chaleur au sein même du matériau à chauffer, ce qui entraîne une élévation rapide de la température du radiateur.

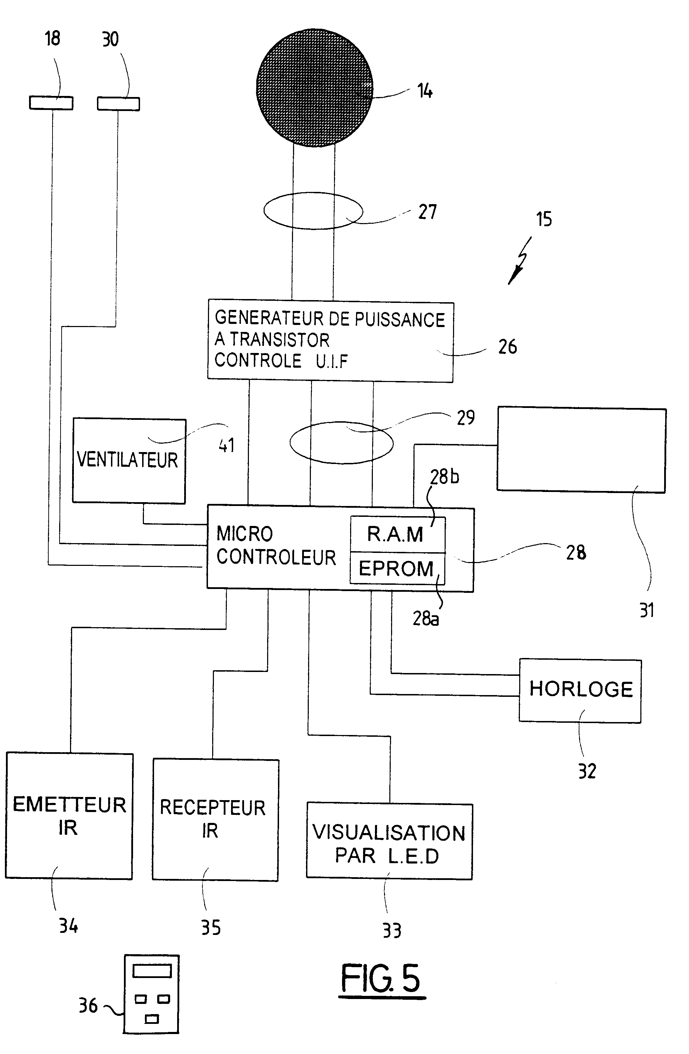

On a représenté sur la figure 5 un schéma synoptique de la carte électronique 15 d'un premier mode de réalisation du dispositif de chauffage à induction.

Cette carte 15 comporte un générateur de puissance 26 alimentant par l'intermédiaire d'une ligne d'alimentation 27 l'inducteur 14.

Le générateur de puissance 26 est relié à un dispositif de commande de température 28,31 pour réguler la température du radiateur autour d'une valeur de consigne. Le dispositif de commande de température comporte d'une part un dispositif à microprocesseur 28 relié au générateur de puissance 26 par l'intermédiaire d'une seconde liaison de commande 29 de façon à commander la tension, le courant et la fréquence de signal alimentant l'inducteur 14 à partir du capteur de température 18 et d'un second capteur de température 30 mesurant la température du local à chauffer.

Le second capteur 30 est placé à distance du radiateur et comporte par exemple un capteur au silicium qui présente une échelle linéaire de 10 V par degré C et une précision de 0,5% dans la plage allant de -30 à +100°C.

Avantageusement, le dispositif à microprocesseur 28 comporte une mémoire morte 28a (EPROM) dans laquelle des programmes de chauffage sont stockés, une mémoire vive 28b (RAM) dans laquelle des données de chauffage sont mémorisées, et est alimenté de façon continue par exemple par une batterie rechargeable.

D'autre part, le dispositif de commande de température comporte un contrôleur de température 31 relié au dispositif à microprocesseur 28 pour limiter la température du radiateur à une valeur de consigne programmée par le constructeur et stockée dans l'EPROM 28a, représentative de la valeur à laquelle le radiateur est autorisé à être chauffé, par exemple en mettant le dispositif hors fonction en cas de dépassement de cette valeur, de façon non réenclenchable par l'utilisateur.

Le dispositif à microprocesseur 28 est également relié à une horloge calendrier 32 pour commander des périodes de chauffe, hebdomadaires ou mensuelles, mémorisées dans les mémoires 28a,28b, et à un dispositif de visualisation 33 comportant les diodes 19,20,21,22,23 et 24 adaptées pour identifier les programmes de chauffage.

Par ailleurs, le dispositif à microprocesseur est relié à un émetteur 34 et à un récepteur 35, par exemple à infrarouge, permettant de le commander au moyen d'une télécommande 36.

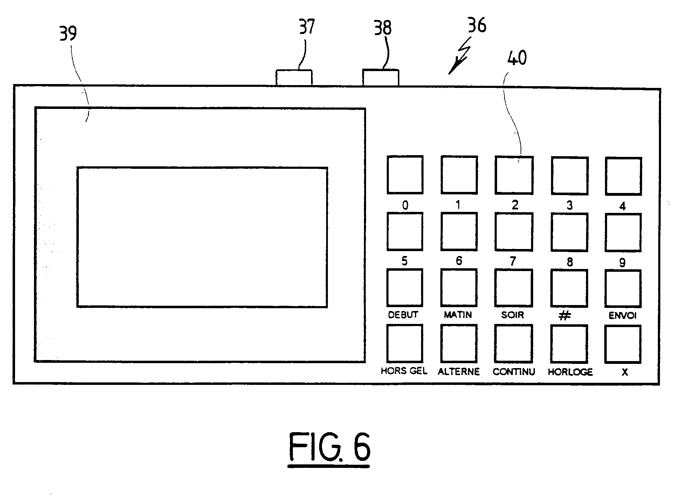

Comme représenté à la figure 6, cette télécommande 36 comporte un émetteur 37 et un récepteur 38 de même nature que l'émetteur et le récepteur de la carte électronique 15. Elle comporte un écran de visualisation à cristaux liquides 39, par exemple de quatre rangées de seize caractères, un clavier 40 avantageusement de vingt touches.

Cette télécommande 36, utilisant avantageusement un rayonnement à infrarouge par porteuse de 70 kHz et par modulation de type pulsé permet à l'utilisateur d'interroger le dispositif de chauffage afin d'obtenir les informations dont il a besoin telles que la température du local, les différentes séquences de chauffage entrées en mémoire, etc..., et de stocker en mémoire des valeurs de consigne auxquelles le dispositif sera asservi.

Les fonctions citées sont commandées par le dispositif à microprocesseur 28.

Selon cette disposition, le dispositif à microprocesseur 28 réalise les fonctions suivantes :
- il prend en compte la valeur des mesures de température des capteurs 18 et 30 ;
- il détermine la valeur des courants dans l'inducteur 14 ;
- il fait référence aux programmes journaliers inclus dans la mémoire 28a ;
- il reçoit et gère les ordres envoyés par la télécommande 36 ; et
- il transmet les informations vers la télécommande 36.

Afin de réaliser une aération de la carte et de l'inducteur 14, le microprocesseur est également relié à un ventilateur 41 interne au dispositif.

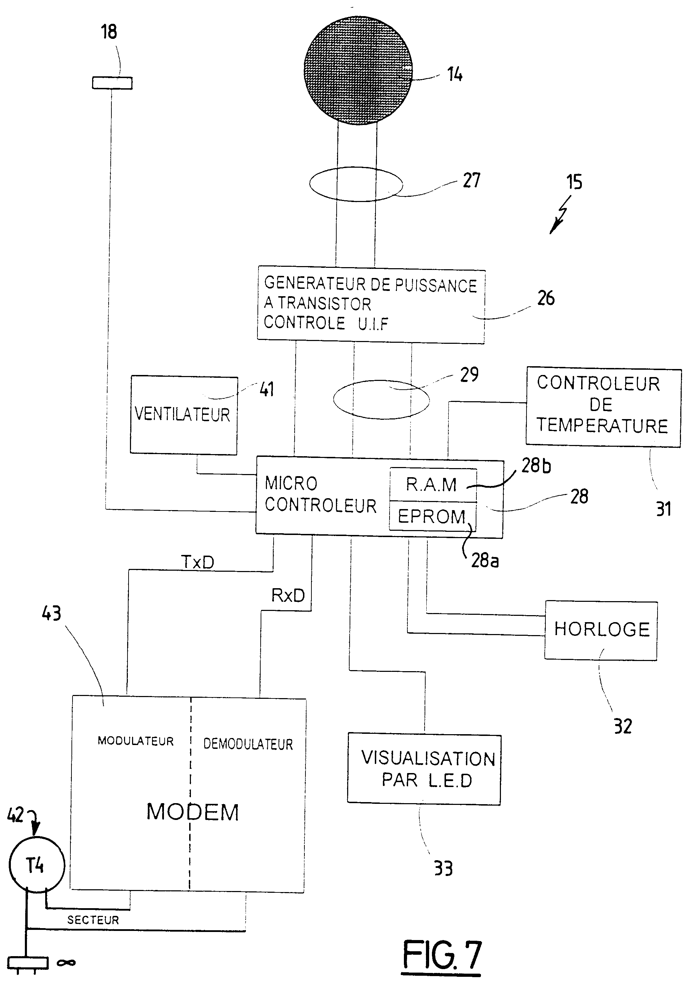

Selon un autre mode de réalisation du dispositif de chauffage représenté sur la figure 7, le capteur de température du local est un thermostat 42 alimenté par le secteur et utilisé pour mesurer la température du local à chauffer.

Dans ce cas, le dispositif comprend un modem 43 relié au dispositif à microprocesseur 28 du dispositif de commande de température et branché sur le secteur de façon à réaliser une liaison par courant porteur entre le thermostat 42 et le dispositif à microprocesseur 28. Avantageusement, on utilisera une modulation FSK, par déplacement de fréquence qui permet de s'affranchir d'un grand nombre de bruits impulsionnels d'origines diverses (moteur, tube fluorescent, etc...) qui transitent dans la bande de 10 à 40 kHz utilisée.

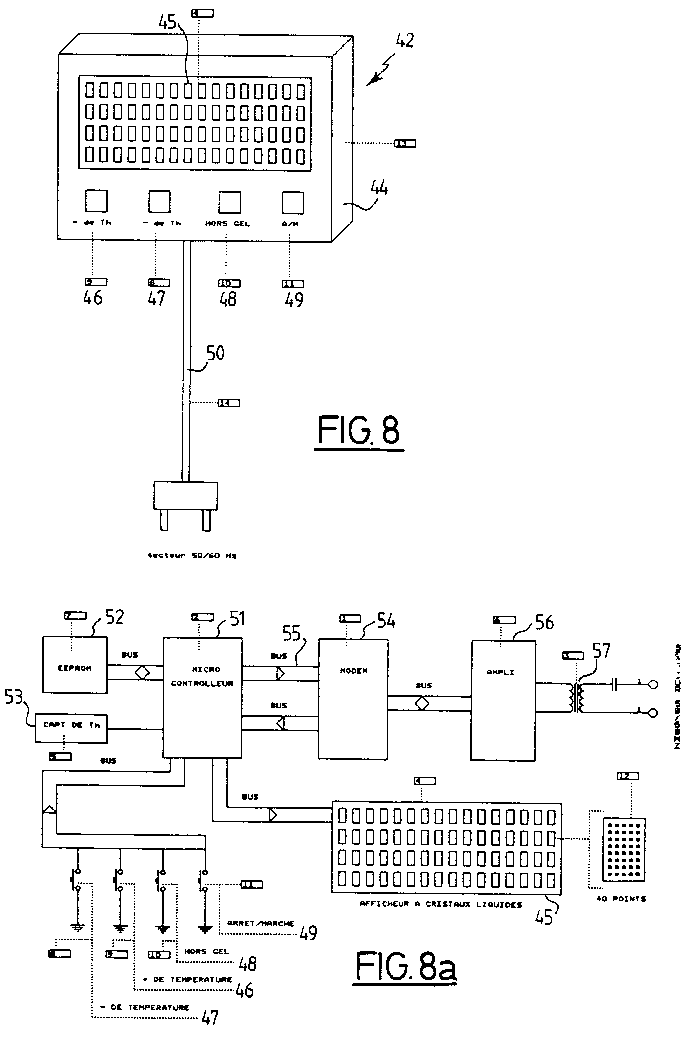

Comme représenté à le figure 8, le thermostat comprend un boîtier 44, un afficheur à cristaux liquides 45, par exemple de quatre rangées de seize caractères de 40 points, et des touches de commande 46,47,48 et 49. Il est alimenté par le secteur au moyen d'un cordon d'alimentation 50.

Comme cela est représenté sur la figure 8a, le thermostat 42 comporte un microcontrôleur 51 relié à l'afficheur à cristaux liquides 45, aux touches de commande 46,47,48 et 49, à une mémoire 52, avantageusement de type EEPROM, à un capteur de température 53 et à un circuit intégré de modulation-démodulation 54.

La mémoire 52, le circuit intégré de modulation-démodulation 54, les touches de commande et l'afficheur à cristaux liquides sont reliés au microcontrôleur 51 par l'intermédiaire d'un réseau de bus de données 55. Ce réseau de bus de données relie également le circuit intégré de modulation-démodulation 54 à un amplificateur 56 lui même relié par l'intermédiaire d'un transformateur 57 au secteur.

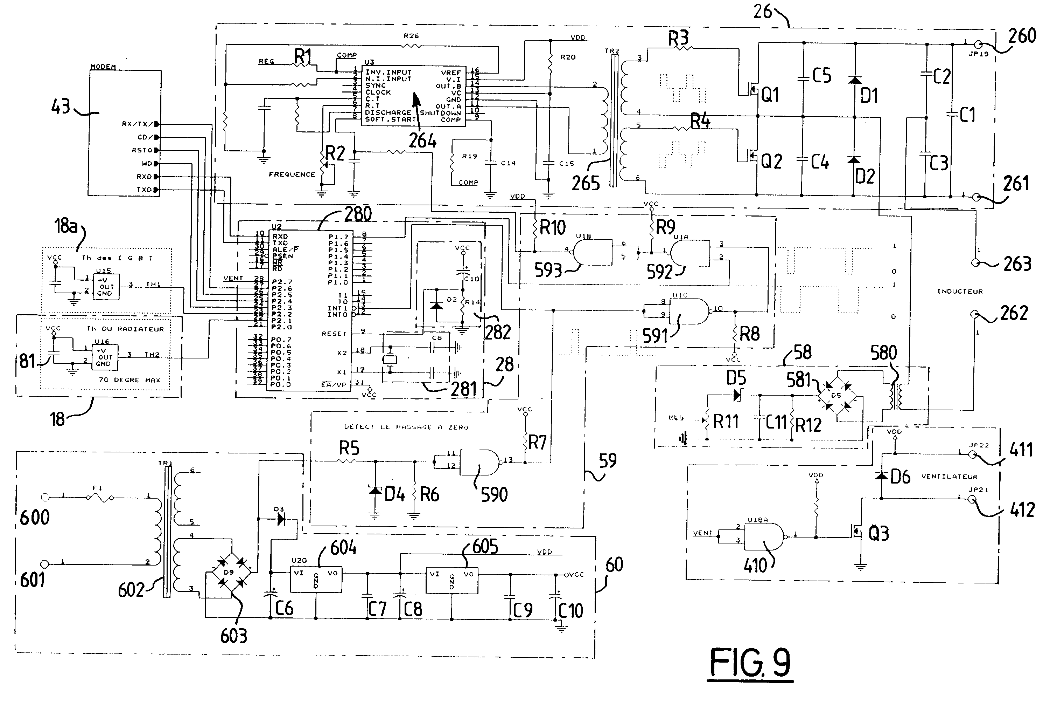

La constitution de la carte électronique 15 du dispositif de chauffage va maintenant être décrite de façon plus précise en référence à la figure 9.

Le dispositif à microprocesseur 28 comporte un microprocesseur 280 dont les broches RXD,TXD de réception et de transmission de données sont reliées respectivement aux broches RXD et TXD du modem 43 dont la structure sera décrite par la suite.

Le dispositif 28 comporte également un oscillateur à quartz 281 dont les bornes sont reliées au microprocesseur 280. Cet oscillateur a avantageusement une fréquence de 11,0592 MHz et pilote le microprocesseur de façon à éviter une dérive dans le temps de la fréquence porteuse.

En outre, la broche RESET du microprocesseur est reliée à un générateur d'impulsions 282 adapté pour délivrer une impulsion lors du démarrage du dispositif de façon à réinitialiser le microprocesseur 280.

Par ailleurs, son port P2.1 est relié au capteur 18 de mesure de la température du radiateur, composé d'un capteur 180 proprement dit dont une première borne est reliée à une tension continue VCC et une deuxième borne est reliée à la masse. Ces deux bornes sont de plus reliées au moyen d'un condensateur 181. Le capteur de température 180 constitue un convertisseur température-fréquence, dont la fréquence du signal de sortie varie en fonction de la température détectée.

Le microprocesseur, à partir des valeurs fournies par le capteur 18 et le modem 43, commande le générateur de puissance 26. Ce générateur est alimenté par des bornes d'entrée 260 et 261 reliées au secteur et fournit sur des bornes de sortie 262 et 263 un signal de courant alternatif alimentant l'inducteur 14.

Le générateur de puissance 26 comporte un circuit d'alimentation à découpage 264, un transformateur 265 et deux transistors Q1,Q2 montés en demi-pont par exemple des transistors IGBT.

Ce circuit d'alimentation à découpage 264 est reliée par l'intermédiaire d'une résistance de liaison R1 à la sortie d'un circuit de détection d'intensité 58.

En outre, la borne RT est reliée à la masse au moyen d'une résistance variable R2 destinée à ajuster la fréquence du signal d'alimentation de l'inducteur. Par ailleurs, ce circuit d'alimentation à découpage 264 et le microprocesseur 280 sont reliés à un circuit de détection de passage à zéro 59.

De plus, la borne GND du circuit d'alimentation à découpage 264 est reliée à la masse, et ses sorties OUT.A et OUT.B sont reliées respectivement aux bornes du transformateur 265.

Le microprocesseur 280 commande le circuit d'alimentation à découpage 264 de façon à délivrer en sortie du transformateur 265 deux signaux de signes opposés dont la forme est représentée en pointillés.

Les sorties de ce transformateur sont reliées d'une part par l'intermédiaire de résistances R3 et R4 aux grilles des deux transistors Q1 et Q2, respectivement, et d'autre part aux sources de ces transistors.

En outre, deux diodes D1,D2 roue libre en série sont montées en parallèle chacune sur le trajet de courant dans les transistors Q1,Q2 de façon à les protéger. Egalement, un condensateur C1 de découplage et deux ensembles de condensateur en série C2,C3, qui complètent le demi-pont formé par les transistors Q1 et Q2, sont placés en parallèle sur les transistors Q1 et Q2. De plus, deux condensateurs C4,C5 d'aide à la commutation relient respectivement les drains et les sources des transistors Q1 et Q2.

La borne commune entre les deux condensateurs C2 et C3 est reliée à la borne de sortie 263, et la borne commune entre les deux transistors Q1 et Q2 est connectée à la borne de sortie 262 par l'intermédiaire du circuit 58 de détection d'intensité, les bornes de sorties 262,263 étant connectées à l'inducteur 14.

Par ailleurs, cette carte électronique 15 comporte un circuit générateur de tension d'alimentation 60 destiné à délivrer des tensions continues VDD et VCC de préférence respectivement égales à 12V et 5V.

Le générateur de tension d'alimentation 60 est relié au secteur par l'intermédiaire de deux bornes d'entrée 600 et 601 qui alimentent par l'intermédiaire d'un fusible F1 un abaisseur de tension 602.

Le circuit abaisseur 602 est relié par l'intermédiaire d'un circuit en pont 603 au circuit détecteur de passage à zéro 59.

Par ailleurs, la sortie de ce circuit en pont 603 est connectée par l'intermédiaire d'une diode D3 à deux générateurs de tension montés en série constitués de façon connue par l'association d'un composant d'alimentation respectivement 604 et 605 et de deux condensateurs respectivement C6,C7 et C8, C9. La sortie du premier générateur de tension délivre une tension de 12V, alors que la sortie du second générateur de tension délivre aux bornes d'un condensateur C10 une tension de 5V. Ces tensions sont destinées à alimenter les différents composants du circuit.

Le circuit de détection de passage à zéro 59 comporte quatre portes logiques NON-ET 590,591,592 et 593, montées en série et dont trois d'entre elles sont montées en inverseur 590,591 et 593.

L'entrée du premier inverseur 590 est reliée par l'intermédiaire d'une résistance R5 à la sortie du pont 603 du générateur de tension d'alimentation 60 et à la masse par l'intermédiaire d'une résistance R6 et d'une diode D4.

La sortie de ce premier inverseur est connectée à la tension d'alimentation continue VCC par une résistance R7, à l'entrée du second inverseur 591 et à la sortie INT1 d'interruption inversée du microprocesseur 280.

La sortie de l'inverseur 591 est reliée à la tension d'alimentation continue VCC au moyen d'une résistance R8 et à une entrée de la porte 592, l'autre entrée de la porte 592 étant reliée au microprocesseur. La sortie de cette porte est reliée à la tension d'alimentation continue VCC par l'intermédiaire d'une résistance R9 puis inversée par l'inverseur 593 dont la sortie est connectée à l'alimentation continue VDD par l'intermédiaire d'une résistance R10, afin d'obtenir une tension de 12V lorsque la porte 593 est au niveau haut.

La sortie de cet inverseur fournit le signal d'alimentation de la broche SOFT START du circuit d'alimentation à découpage 264 du générateur de puissance.

Par ailleurs, le circuit d'alimentation à découpage est commandé par le circuit de détection d'intensité 58. Celui-ci comporte une résistance variable R11 reliée au circuit d'alimentation à découpage. La sortie de cette résistance est connectée à un transformateur 580 par l'intermédiaire d'un pont de diodes 581, d'une diode zener D5, d'un condensateur C11 et d'une résistance R12, ces condensateur et résistance étant tous deux placés en parallèle sur le pont 581.

La carte électronique 15 comporte également un circuit de commande du ventilateur 41, commandé par le microprocesseur 280 pour le faire fonctionner dès que l'inducteur 14 est mis en fonction, et pour continuer à le faire fonctionner quelques minutes après l'arrêt de l'inducteur 14.

Le circuit de commande du ventilateur comporte un circuit inverseur 410 dont l'entrée est reliée au microprocesseur 280 et dont la sortie est reliée à la grille d'un transistor Q3, avantageusement de type MOS.

La source de ce transistor Q3 est reliée à la masse et son drain fournit les signaux de commande du ventilateur au niveau de deux bornes 411 et 412, ces bornes étant reliées par l'intermédiaire d'une diode D6 de protection, dont la cathode est reliée à la tension VDD.

La carte électronique 15 comporte en outre un dispositif de sécurité constitué par un troisième capteur de température 18a, de même nature que le capteur de mesure de la température du radiateur, pour mesurer la température des transistors Q1 et Q2, et pour arrêter le fonctionnement du dispositif à une valeur de sécurité mémorisée dans l'EPROM 28a.

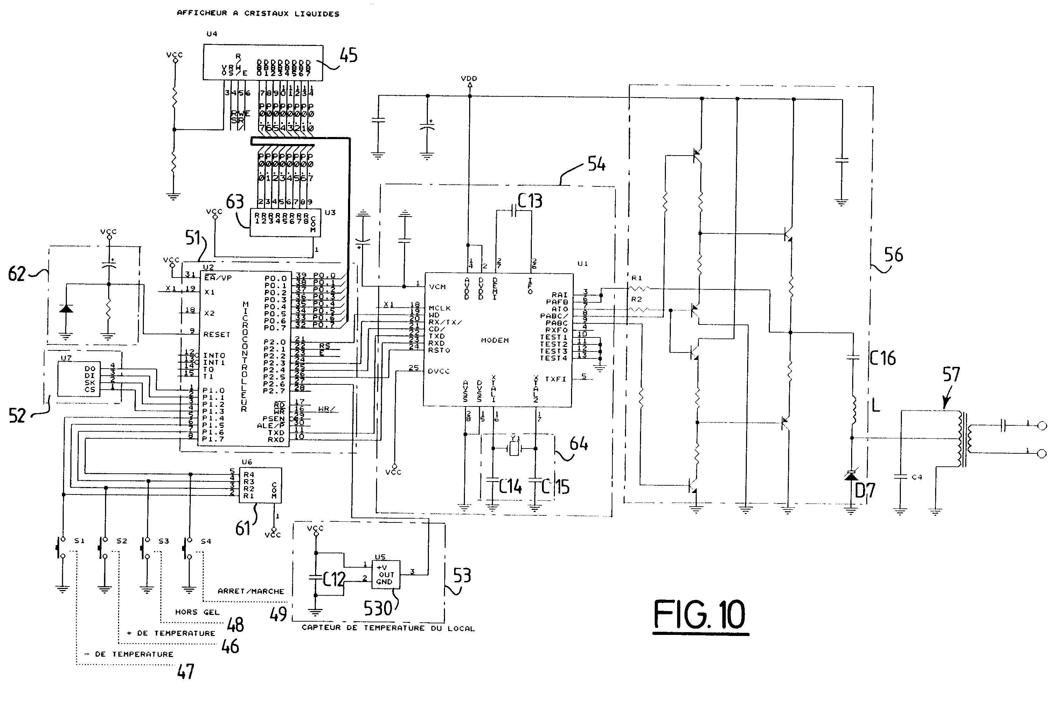

Le circuit du thermostat 42 va maintenant être décrit en référence à la figure 10.

Le microcontrôleur 51 de ce thermostat est relié aux touches de commande 46,47,48 et 49 et est également relié à un boîtier de résistance 61 destiné à relier à la masse les collecteurs ouverts des ports du microcontrôleur 51.

Ce microcontrôleur est également relié au capteur de température du local 53 qui comporte un capteur 530 dont les bornes sont reliées au moyen d'un condensateur C12 chargé à la tension VCC.

Par ailleurs, les ports P1.0,P1.1,P1.2 et P1.3 sont connectés aux broches D0,D1,SK et C5 de la mémoire EEPROM 52.

De la même façon que pour le microprocesseur 280 de la carte électronique 15, la broche RESET est reliée à un dispositif 62 adapté pour générer une impulsion lors de la mise en marche du thermostat.

En outre, les broches TXD et RXD du microcontrôleur sont connectées respectivement aux broches TXD et RXD du modem 54.

Par ailleurs, les ports P0.0 à P0.7 sont reliés aux bornes d'entrée de l'afficheur à cristaux liquides 45 et à un second réseau de résistances 63 lui même alimenté par une tension continue VCC.

Le circuit de modulation-démodulation 54 identique au modem de la carte électronique 15 est alimenté par la tension continue VCC et sa broche VCM est reliée à la masse. De plus, les broches AVDD, DVDD sont portées à un potentiel VDD et les broches AVSS et DVSS sont reliées à la masse.

De plus, les broches DEHI et IFO de ce modem sont reliées par un condensateur C13 et les broches XTAL1 et XTAL2 sont reliées par un oscillateur à quartz 64 proprement dit dont les bornes sont reliées à la masse par des condensateurs C14 et C15. Cet oscillateur a également une fréquence de 11,0592 MHz et evite une dérive de la fréquence porteuse en fonction de la température.

Le dispositif de modulation-démodulation 54 est également relié à l'amplificateur 56 par l'intermédiaire des broches RAI,PAFB,ATO,PABC/,et PABC, les broches TEST1,TEST2,TEST3 et TEST4 étant connectées à la masse.

Il est de plus relié par l'intermédiaire d'une inductance L, d'une diode D7 et d'un condensateur C16 au transformateur 57. Ce transformateur permet d'adapter et d'isoler la sortie de l'amplificateur 56 du secteur. Il délivre un signal superposé au courant du secteur, destiné à la carte électronique 15.

Le fonctionnement du dispositif est le suivant.

Lors de la mise en marche du dispositif de chauffage, le microprocesseur 280 et le microcontrôleur 51 reçoivent une impulsion en provenance des dispositifs de génération d'impulsion 282,62 qui les initialisent.

Le microprocesseur 280 et le microcontrôleur 51 du circuit de commande de température utilisent alors le programme stocké en début de mémoire EPROM 28a.

L'utilisateur peut dès lors changer de programme au moyen de la télécommande 36 (figure 5) ou en agissant sur les touches de commande du thermostat 42 (figure 7).

Le dispositif à microprocesseur 28, à partir des indications fournies par le capteur de température du local 30 ou par le thermostat 42, commande le circuit d'alimentation à découpage 264 (figure 9) qui contrôle la commutation des transistors Q1 et Q2. Le signal présent aux bornes d'alimentation 260 et 261 est alors découpé de telle sorte que l'inducteur 14, espacé de 8 mm de la paroi du radiateur 17 dans l'exemple de réalisation décrit, engendre un champ magnétique alternatif variable qui pénètre dans le radiateur.

Par exemple, pour créer un phénomène d'induction sur une épaisseur de 1 mm dans la paroi ferreuse du radiateur 17, la fréquence du signal de sortie des transistors Q1 et Q2 alimentant l'inducteur 14 est approximativement de 31 Khz.

Lors du fonctionnement, au cours duquel les transistors Q1 et Q2 sont commutés tour à tour pour délivrer un signal alternatif d'alimentation de l'inducteur, le circuit de détection 59 détecte les passages à zéro du courant délivré par le secteur afin d'éviter une commutation des transistors à pleine puissance ce qui entraînerait leur destruction.

En outre, le circuit de détection de courant 58 bloque le fonctionnement du dispositif si aucun courant n'est transmis à l'inducteur 14 dans le cas où celui-ci ne serait pas appliqué contre le radiateur de façon satisfaisante.

De plus, le contrôleur de température 31 (figures 5 et 7) bloque de façon non réenclenchable le fonctionnement du dispositif à partir d'une valeur de température du radiateur, par exemple à une température de 70°C afin d'éviter que l'utilisateur ne se brûle.

Enfin, la mémoire EEPROM 52 du thermostat 42, de préférence d'une capacité de 256 octets, permet de sauvegarder les informations de températures en cas de coupure du secteur.

Dans l'exemple de réalisation représenté sur la figure 7, qui utilise un thermostat relié au dispositif à microprocesseur 28 par des moyens de modulation-démodulation, les données sont transmises en série par impulsions sous forme de trames superposées au courant du secteur, qui sont suivies d'un message d'accusé de réception.

La porteuse a avantageusement une fréquence de 132,5 KHz et la trame a une fréquence de 133,05 KHz lorsque TXD est au niveau bas, et de 131,85 KHz lorsque TXD est au niveau haut.

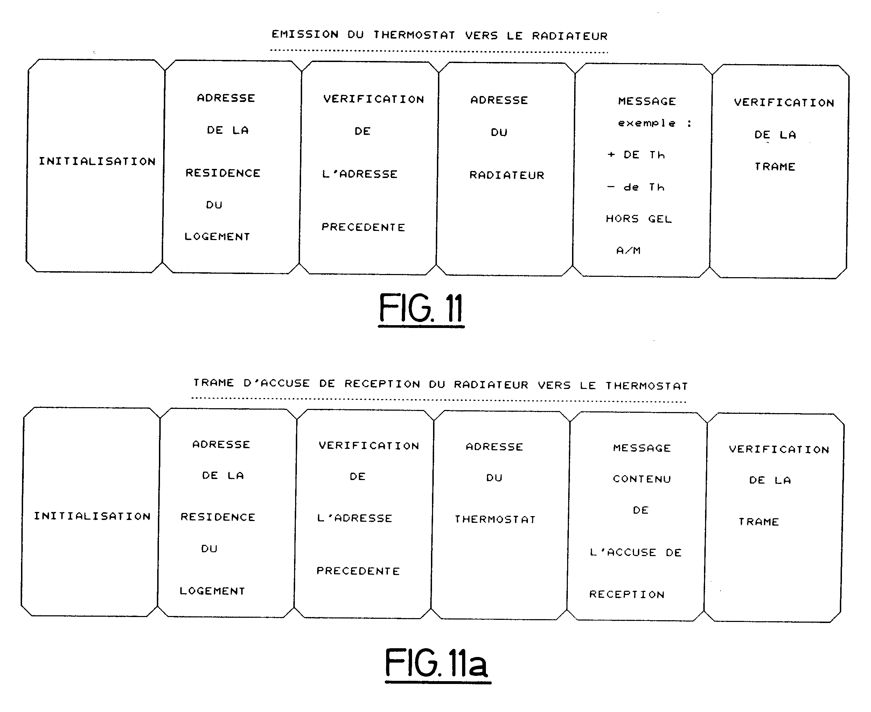

Une trame est composée comme représentée aux figures 11,11a :
*du thermostat vers le radiateur*
d'un ou deux octets, d'initialisation
d'un ou deux octets, pour l'adresse de la résidence (appartement)
d'un ou deux octets, pour vérification de l'adresse de la résidence
d'un ou deux octets, pour l'adresse de l'inducteur
d'un ou deux octets, du modem 43 pour chaque boîtier
d'un ou deux octets, de vérification de l'adresse précédente des modems 43
d'un ou deux octets, de mode de chauffage
d'un ou deux octets, d'arrêt ou marche
d'un ou deux octets, de vérification de la trame
*du radiateur vers le thermostat*
d'un ou deux octets, d'initialisation
d'un ou deux octets, pour l'adresse de la résidence
d'un ou deux octets, pour la vérification de l'adresse de de la résidence
d'un ou deux octets, pour l'adresse de l'inducteur
d'un ou deux octets, pour l'adresse du thermostat 42
d'un ou deux octets, pour le contenu de l'accusé de réception
d'un ou deux octets, pour la vérification de la trame

Cette composition de la trame autorise une commande de plusieurs inducteurs à partir d'un unique thermostat dans le cas par exemple où plusieurs radiateurs sont installés dans une même pièce, ou dans le cas où plusieurs inducteurs sont disposés sur un même radiateur, comme cela est représenté sur la figure 4.

Dans ce dernier cas, les inducteurs peuvent être commandés pour fonctionner à tour de rôle ou plusieurs inducteurs peuvent fonctionner simultanément en fonction de la température désirée. A cet effet une adresse particulière est affectée à chaque inducteur du radiateur.

Dans les différents modes de réalisation qui ont été décrits, on utilise de préférence les composants suivants pour réaliser la carte électronique 15 :
* pour le microprocesseur 280 : un microprocesseur 87 C51 de chez "INTEL" ou "PHILIPS";
* pour le circuit d'alimentation à découpage 264: un circuit SG2525A de chez "THOMSON" ;
* pour les modems 43,54 : un modem ST7537 de chez "THOMSON" ;
* pour le transistor Q1 : un transistor MOSFET IGBT IRGPC40V ULTRA FAST sur un radiateur ou 1MBH60 100SPM ;
* pour le transistor Q2 : un transistor MOSFET IGBT IRGPCU 40V sur un radiateur ou 1MBH 100SPM ; et
* pour les capteurs de température 18,18a et 530: des circuits SMT160.30 "ITT DISTRIBUTION".

## Revendications

1. Dispositif de chauffage pour radiateur à eau ou autre liquide caloporteur, caractérisé en ce qu'il comporte au moins un inducteur (14) destiné à être appliqué contre une paroi du radiateur avec interposition d'une couche de matériau isolant, alimenté par un générateur de puissance (26) et adapté pour élever la température du radiateur, au moins un premier capteur (18,30) de mesure de la température du radiateur et un dispositif de commande de température (28,31) adapté pour commander en fonction de la température mesurée par le premier capteur le fonctionnement de l'inducteur (14) pour réguler la température du radiateur autour d'une valeur de consigne à laquelle le radiateur est autorisé à être chauffé.

2. Dispositif de chauffage selon la revendication 1, caractérisé en ce qu'il comporte en outre un second capteur (30;42) de mesure de la température d'un local à chauffer, placé à distance du radiateur et également relié au dispositif de commande de température (28,31), pour permettre la commande par celui-ci du fonctionnement de l'inducteur (14) en fonction des valeurs de températures mesurées du radiateur et du local.

3. Dispositif de chauffage selon la revendication 2, caractérisé en ce que les premier et second capteurs de température sont reliés à un dispositif à microprocesseur (28) du dispositif de commande de température (28,31), ce dispositif à microprocesseur étant relié au générateur de puissance (26) pour commander la tension, le courant et la fréquence du signal alimentant l'inducteur (14).

4. Dispositif de chauffage selon la revendication 2 ou 3, caractérisé en ce que le second capteur de température est un thermostat (42) relié au dispositif à microprocesseur (28) par des moyens à modulateur-démodulateur (43,54).

5. Dispositif de chauffage selon l'une des revendications 3 et 4, caractérisé en ce que le dispositif à microprocesseur (28) comporte des mémoires RAM, EPROM (28b,28a) dans lesquelles des programmes de chauffage sont mémorisés.

6. Dispositif de chauffage selon l'une quelconque des revendications 1 à 5, caractérisé en ce que le générateur de puissance (26) comporte des transistors (Q1,Q2) fonctionnant en régime de commutation et commandes pour commuter à tour de rôle afin de délivrer à l'inducteur (14) un signal alternatif dont la fréquence est fixée en fonction de la distance entre l'inducteur (14) et le radiateur.

7. Dispositif de chauffage selon l'une quelconque des revendications 1 à 6, caractérisé en ce qu'il comprend de plus une horloge (32) reliée au dispositif à microprocesseur (28) pour commander des périodes de chauffe mémorisées dans les mémoires (28a,28b).

8. Dispositif de chauffage selon l'une quelconque des revendications 1 à 7, caractérisé en ce que le dispositif de commande de température comporte un contrôleur de température (31) de limitation de la température du radiateur destiné à arrêter le fonctionnement de l'inducteur (14) de façon non réenclenchable par l'utilisateur, lorsque la température de l'inducteur atteint une valeur maximale de seuil.

9. Dispositif de chauffage selon l'une quelconque des revendications 1 à 8, caractérisé en ce que l'inducteur (14) a une forme de bobine plane et est formé d'un conducteur (140) constitué de fils torsadés.

10. Dispositif de chauffage selon l'une quelconque des revendications 1 à 9, caractérisé en ce que l'inducteur (14) comporte en outre au moins un élément en ferrite (142) de fermeture de champ magnétique plaqué sur une seconde plaque de matériau isolant (141) elle même disposée sur la face de la bobine plate opposée au radiateur (17).

11. Dispositif de chauffage selon l'une quelconque des revendications 1 à 10, caractérisé en ce qu'un suscepteur en matériau ferreux est plaqué contre la plaque de matériau isolant (16), ledit suscepteur ayant une forme adaptée à la surface d'une zone d'un radiateur sur laquelle il est destiné à être appliqué.

12. Dispositif de chauffage selon l'une quelconque des revendications 1 à 11, caractérisé en ce que le premier capteur (18) de mesure de la température du radiateur comporte une résistance au platine.

13. Dispositif de chauffage selon l'une quelconque des revendications 1 à 12, caractérisé en ce qu'il comprend une télécommande (36) munie d'un émetteur (37) et d'un récepteur (38) pour dialoguer avec un émetteur et un récepteur (34,35) reliés au dispositif à microprocesseur (28).

14. Dispositif de chauffage selon l'une quelconque des revendications 1 à 13, caractérisé en ce que la télécommande (36) est une télécommande à infrarouge.
